# FASCICULE DE BREVET EUROPEEN

(11) **EP 0 916 934 B1**
(45) Date de publication et mention de la délivrance du brevet: **25.09.2002**
(21) Numéro de dépôt: 97119703.3
(22) Date de dépôt: 11.11.1997
(51) Int. Cl.: G01L 1/04, G01L 5/22

(54) **Capteur de force numérique à cellule de mesure déformable élastiquement et procédé de mesure directe de l'application d'une force**
Numerischer Kraftsensor mit einer elastisch verformbaren Messzelle und Verfahren zur direkten Messung einer angewendeten Kraft
Digital force sensor with an elastic deformale measurement cell and method for direct measurement of an applied force

(43) Date de publication de la demande: 19.05.1999
(73) Titulaire: Sysmelec SA, 2002 Neuchâtel (CH)
(72) Inventeur: Odiet, Maxime, 2036 Cormondrèche (CH)
(74) Mandataire: Ravenel, Thierry Gérard Louis

(56) Documents cités:
- WO-A-96/02814
- DE-A- 3 243 350
- FR-A- 2 696 002
- GB-A- 1 428 175
- GB-A- 2 184 996
- US-A- 4 838 369
- US-A- 5 293 809
- PATENT ABSTRACTS OF JAPAN vol. 010, no. 010 (M-446), 16 janvier 1986 & JP 60 172446 A (HITACHI SEISAKUSHO KK), 5 septembre 1985,

## Description

L'invention concerne un capteur de force numérique à cellule de mesure déformable élastiquement pour la mesure précise d'une force et en particulier de la force verticale d'application de composants de faibles dimensions tels que des composants électroniques, optiques, mécaniques ou analogues sur la surface d'un substrat ou d'un autre composant. L'invention concerne également un procédé de mesure directe de l'application d'une force mettant en oeuvre le capteur susmentionné.

Le montage en grande série et à faibles coûts de composants de ce type à la surface d'un substrat est habituellement réalisé au moyen d'un bras manipulateur équipé à son extrémité libre d'une buse de saisie à dépression. Dans le cas d'un composant électronique, la buse vient accoster le composant à monter dans un magasin dans lequel il est rangé, le prélève par aspiration, puis l'applique à la surface d'un circuit imprimé en cours d'assemblage. Pour la solidarisation des composants sur le circuit, on dépose préalablement, de façon classique, un lit de soudure ou de colle conductrice sur des plages de contact reliant entre elles des pistes conductrices du circuit imprimé.

En raison de la miniaturisation sans cesse croissante des composants et des structures dans lesquelles ces composants sont utilisés, ces derniers doivent être positionnés sur leurs substrats avec une précision accrue afin d'obtenir un rendement de fabrication satisfaisant. D'autre part, il s'avère également indispensable de pouvoir contrôler avec une très grande précision la force avec laquelle le composant est appliqué sur la surface de son substrat. En effet, une force d'application trop élevée peut provoquer la déformation mécanique, voire la destruction irréversible du composant lors de son montage sur le substrat. De même, dans le cas de composants électroniques, on tente d'éviter, lors de l'application du composant sur le substrat, toute altération ou débordement du lit de soudure ou de colle conductrice qui peut entraîner, localement, la rupture du contact électrique ou engendrer des courts circuits avec des pistes conductrices voisines.

Pour résoudre ces difficultés, il est connu d'équiper le bras manipulateur d'un capteur de force analogique de type piézo-électrique dont le principe de fonctionnement est le suivant : un cristal piézo-électrique délivre en sortie une charge électrique proportionnelle à la déformation mécanique qu'il subit, déformation résultant directement de la force avec laquelle le bras manipulateur applique le composant sur le substrat. Il est ainsi possible de mesurer, et donc de contrôler en continu, la force d'application qu'exerce le bras manipulateur sur le composant à monter. Une solution de ce type est par exemple connue du brevet US 4,838,369 qui décrit un capteur de force comprenant une cellule de mesure du type parallélogramme déformable, ainsi que deux résonateurs dont l'un se trouve comprimé, tandis que l'autre est soumis à une tension mécanique lorsqu'une force est appliquée sur le capteur. Les résonateurs délivrent chacun un signal dont la fréquence varie linéairement avec l'intensité de la force appliquée. Ces signaux sont numérisés par des circuits de traitement numérique, par exemple un microprocesseur, et le résultat de la conversion est affiché par un dispositif d'affichage approprié qui peut être numérique ou analogique.

Cette première solution de l'art antérieur présente néanmoins un certain nombre d'inconvénients au premier rang desquels il faut citer la faible intensité de la force d'application souhaitée du bras manipulateur, typiquement inférieure à dix grammes, conduisant à une déformation limitée du cristal piézo-électrique et donc à une charge de sortie peu élevée qu'il est nécessaire d'amplifier préalablement à toute exploitation. Or, les inconvénients liés à l'amplification d'un signal électrique faible sont connus. Ils résident dans le bruit électronique et la distorsion du signal qui conduisent à des erreurs de mesure appréciables et pénalisantes pour la précision de cette dernière, qui reste généralement limitée au voisinage de plus ou moins 3 à 5 %.

Un autre inconvénient majeur du capteur de force piézo-électrique réside dans le fait que son cristal piézo-électrique est un élément extrêmement rigide subissant des déformations faibles pour le niveau de forces à mesurer dans les applications susmentionnées. De ce fait, l'opération d'accostage avec un tel capteur est rendue délicate si la force maximum devant être appliquée à un composant est très faible, par exemple inférieure à 1 g, dans la mesure où une faible déformation de l'élément piézo-électrique engendre des forces importantes sur le composant, notamment dans le cas où le substrat est rigide. Pour tenir compte de cette limitation, on doit ralentir la vitesse d'accostage de la buse de saisie lors du prélèvement du composant et de son application sur son substrat, ce qui nuit considérablement à la vitesse de montage des composants et va donc à l'encontre des gains de productivité.

Une seconde solution connue consiste à équiper le bras manipulateur d'un capteur de force analogique de type résistif comprenant un parallélogramme déformable à jauges de contraintes tel que celui décrit dans la demande de brevet DE 32 43 350. Ce document décrit en effet un capteur de force comprenant une cellule de mesure se présentant sous la forme d'une structure en parallélogramme déformable constituée par des montants et des traverses parallèles deux à deux et reliés entre eux par des charnières. De façon analogue à ce qui a été décrit ci-dessus, la déformation du parallélogramme et donc la variation de résistance électrique des jauges que l'on mesure est directement représentative de la force d'application. Le problème de la mesure de très faibles signaux électriques et de leur nécessaire amplification qui altère la précision de mesure reste néanmoins toujours posé. D'autre part, ce capteur résistif nécessite un étalonnage très précis, vieillit mal et présente des problèmes de dérive.

L'invention a donc pour but principal de remédier aux inconvénients de l'art antérieur décrits ci-dessus en proposant un capteur de force numérique notamment pour la mesure précise de la force verticale d'application de composants de faibles dimensions tel que des composants électroniques, optiques, mécaniques ou analogues sur la surface d'un substrat ou d'un autre composant. Un tel capteur est connu de la demande internationale WO 96/02814. Il comprend une cellule de mesure déformable élastiquement sous l'effet de l'application d'une force à mesurer, ainsi que des moyens numériques, notamment une règle optique incrémentale, pour mesurer un déplacement représentatif de la déformation de la cellule. Ce capteur présente cependant un inconvénient notable. Il ne comprend en effet pas de moyen permettant d'effectuer la mise à zéro initiale de la cellule de mesure, c'est-à-dire permettant de déterminer la position de ladite cellule correspondant à l'absence de toute force appliquée. Les mesures effectuées par une telle cellule de mesure risquent donc d'être entachées d'erreur, ce qui est d'autant plus gênant que les forces à mesurer sont faibles.

A cet effet, la présente invention concerne un capteur de force comprenant une cellule de mesure déformable élastiquement, la déformation de cette cellule résultant directement de l'application d'une force, et des moyens numériques pour mesurer un déplacement représentatif de la déformation de la cellule, puis fournissant en réponse à ce déplacement un signal électrique numérique correspondant à la mesure directe de la force appliquée, caractérisé en ce qu'il est associé à une butée pour le réglage de la position de butée de la cellule de mesure à son point de déformation nulle qui correspond à l'absence de toute force appliquée sur ladite cellule.

Grâce à ces caractéristiques, le capteur de force selon la présente invention procure de nombreux avantages parmi lesquels on peut citer l'utilisation d'un système entièrement numérique qui fournit, après étalonnage, un signal numérique correspondant à la mesure directe de la force d'application. Les problèmes liés à l'amplification des signaux de sortie peu élevés des capteurs analogiques antérieurs sont ainsi évités et la précision de mesure, environ dix fois supérieure à celle des capteurs piézo-électriques antérieurs, se situe au voisinage de 0,3 à 0,5 %.

Un autre avantage réside dans la rapidité de réponse de la cellule de mesure du capteur qui permet par exemple à un bras manipulateur d'accoster et d'appliquer plus rapidement les composants sur leur substrat, d'où un gain important en temps de montage et donc en productivité.

Selon l'invention, la butée permet de régler la position de déplacement nulle de la cellule qui correspond à l'absence de toute force appliquée sur cette dernière. La butée permet également d'accélérer l'amortissement du capteur, et donc d'accoster et d'appliquer plus rapidement les composants, d'où à nouveau des gains importants en productivité.

Selon une première variante d'exécution de l'invention, la cellule de mesure du capteur de force numérique comprend une structure en parallélogramme élastiquement déformable unique. Cette structure porte sur son montant extérieur libre une règle incrémentale mobile disposée en regard d'une tête de mesure fixe d'un axe numérique. Le déplacement de la règle résulte directement de la déformation de la cellule de mesure et permet de mesurer la force avec laquelle le bras manipulateur applique le composant sur le substrat.

Selon une variante d'exécution préférée de l'invention, la structure en parallélogramme déformable est prolongée latéralement par une seconde structure analogue de façon à constituer un bras de levier plus important permettant d'amplifier le déplacement de la règle incrémentale pour une force d'application donnée du bras manipulateur, ce qui permet d'améliorer sensiblement la résolution de la mesure.

Selon un autre aspect, la présente invention a également pour objet un procédé selon lequel on convertit une déformation mécanique résultant de l'application d'une force en un déplacement représentatif de cette déformation, et on mesure et on fournit en réponse à ce déplacement un signal électrique numérique correspondant à la mesure directe de la force appliquée.

D'autres caractéristiques et avantages de l'invention apparaîtront à la lecture de la description suivante d'un capteur de force selon l'invention donné à titre purement illustratif et non limitatif, cette description étant faite en liaison avec le dessin dans lequel :
- la figure 1 est une représentation schématique de la variante d'exécution simplifiée du capteur de force numérique selon l'invention ;
- les figures 2A à 2D sont une succession de vues schématiques sur lesquelles on représente un cycle de fonctionnement complet du capteur de force de la figure 1;
- la figure 3 est une vue en perspective de la variante d'exécution préférée de la cellule de mesure du capteur de force numérique selon l'invention;
- la figure 4 est une vue en plan de la cellule de mesure représentée à la figure 3;
- la figure 5 est une vue de côté de la cellule de mesure représentée à la figure 3, et
- la figure 6 est une vue de détail représentant l'une des charnières de la cellule de mesure du capteur de force numérique représentée aux figures 3 à 5.

La présente invention concerne un capteur de force numérique pour la mesure d'une force comprenant une cellule de mesure déformable élastiquement, la déformation de cette cellule résultant directement de l'application de la force, et des moyens numériques mesurant un déplacement représentatif de la déformation de la cellule de mesure, puis fournissant en réponse à ce déplacement un signal électrique numérique correspondant à la mesure directe de la force appliquée.

La déformation mécanique résultant de l'application d'une force est convertie, non plus directement en un signal électrique analogique, mais en un déplacement représentatif de ladite déformation mécanique, et en mesurant et en fournissant en réponse à ce déplacement un signal numérique correspondant à la mesure directe de la force appliquée.

On décrit à titre d'exemple non limitatif l'application avantageuse du capteur de force selon l'invention à la mesure de la force d'application relativement faible d'un composant électronique discret sur la surface d'un circuit imprimé par un bras manipulateur. On comprendra néanmoins que la présente invention n'est pas limitée à ce seul exemple, et qu'elle peut être appliquée à tout type de dispositif ou de procédé de mise en oeuvre dans lequel il est nécessaire de mesurer avec une grande précision l'intensité d'une force.

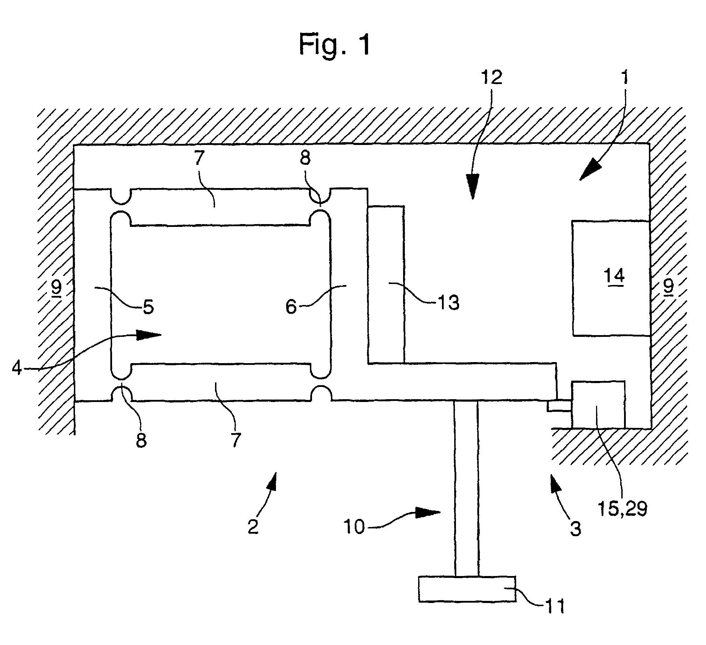

Dans sa variante d'exécution simplifiée représentée schématiquement sur la figure 1, le capteur numérique selon l'invention, désigné dans son ensemble par la référence numérique 1, comprend une cellule de mesure 2 déformable élastiquement et des moyens de mesure numériques 3.

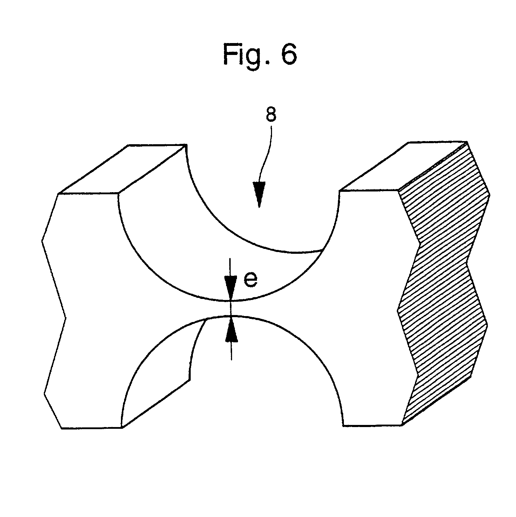

La cellule de mesure 2 est préférentiellement réalisée en acier. Elle peut toutefois être également réalisée en aluminium ou en tout autre matériau présentant les critères d'élasticité requis. Comme représenté sur la figure 1, la cellule de mesure 2 est du type parallélogramme déformable 4 constitué de deux montants intérieur 5 et extérieur 6 et de deux traverses telles que 7 parallèles deux à deux et reliés entre eux à pivotement par des articulations élastiques telles que 8. Ces articulations 8 peuvent prendre la forme d'étranglements ou de charnières élastiques. Dans la présente description, on entend par charnière une paroi amincie reliant deux éléments mobiles l'un par rapport à l'autre, à savoir un montant 5 ou 6 et une traverse 7. Dans le cas où la cellule de mesure est réalisée en acier, ces charnières 8 peuvent être obtenues par électroérosion et présentent de façon caractéristique une épaisseur e de la paroi amincie de l'ordre de 20 à 50 microns pour l'application décrite. Leur élasticité détermine la résolution de la mesure. Un exemple d'une telle charnière élastique 8 est représentée à la figure 6.

La cellule de mesure 2 est montée fixe par le montant intérieur 5 du parallélogramme déformable 4 sur un bâti 9 d'un bras manipulateur (non représenté). Elle est fixée sur le bâti 9 par tout moyen approprié tel que vissage, soudage ou autre. Le montant extérieur 6 du parallélogramme déformable 4 est libre et porte une buse de saisie 10 interchangeable, par exemple à dépression, au moyen de laquelle le bras manipulateur prélève un composant électronique discret 11 par aspiration.

Les moyens de mesure numériques 3 se présentent préférentiellement sous la forme d'un axe numérique 12. Il s'agit d'un dispositif bien connu de l'homme du métier, couramment employé pour mesurer de façon très précise les déplacements d'un mobile, notamment dans le domaine de la robotique. Cet axe numérique 12 comprend de façon classique une règle incrémentale 13 solidaire de la cellule de mesure 2 par le montant extérieur 6 libre du parallélogramme déformable 4, et une tête de mesure 14 montée fixe sur le bâti 9 du bras manipulateur, en regard de la règle incrémentale 13.

La règle incrémentale 13, solidaire de la cellule de mesure 2 par le montant extérieur 6 libre du parallélogramme déformable 4, est donc mobile relativement à la tête de mesure 14 fixe. La règle incrémentale 13 est préférentiellement une règle optique sans contact, mais il peut aussi s'agir d'une règle magnétique ou autre. Le capteur de force 1 comprend enfin une butée de réglage 15 fixée sur le bâti 9 du bras manipulateur dont le rôle sera décrit en détail ultérieurement.

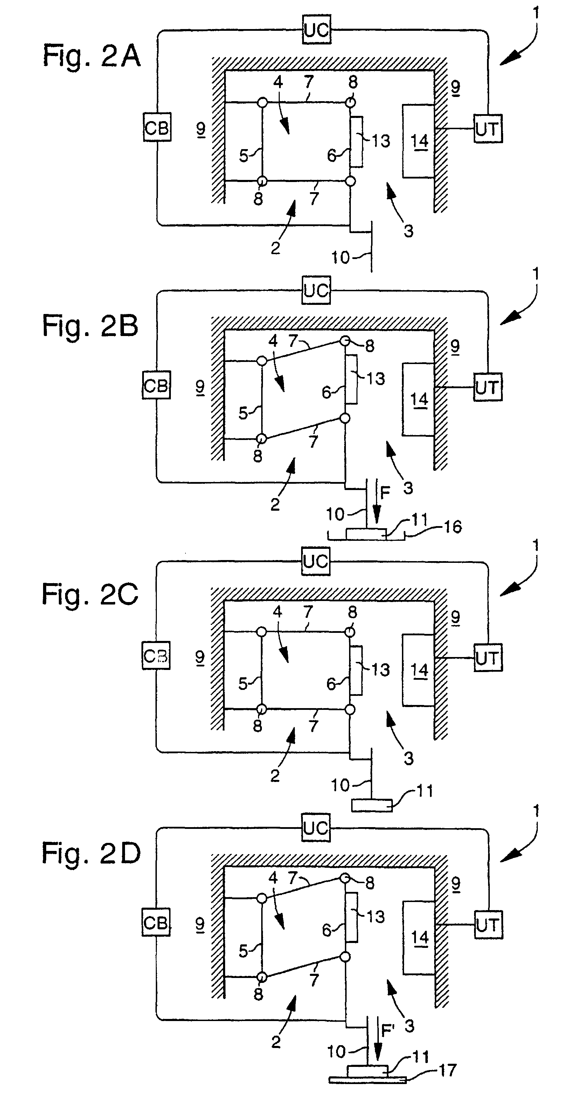

On examine maintenant un cycle de fonctionnement complet du capteur de force numérique 1 selon l'invention en référence aux figures 2A à 2D.

Sur la figure 2A, le bras manipulateur s'apprête à venir prélever un composant électronique discret 11 rangé dans un magasin 16. Le capteur de force 1 est au repos.

Sur la figure 2B, la buse de saisie 10, solidaire du montant extérieur 6 libre du parallélogramme déformable 4, accoste le composant électronique 11 rangé dans son magasin 16 et exerce sur celui-ci une force de pression F verticale dirigée vers le bas. Sous l'effet de la réaction à cette force F, le parallélogramme 4 de la cellule de mesure 2 se déforme élastiquement vers le haut, ce qui provoque le déplacement de la règle incrémentale 13 devant la tête de mesure 14 de l'axe numérique 3. Celui-ci détecte ce mouvement et fournit en réponse un signal numérique correspondant directement à la mesure du déplacement de la règle incrémentale 13. Les déformations du parallélogramme 4 de la cellule de mesure 2 et les déplacements correspondants de la règle incrémentale 13 ayant été préalablement étalonnés à l'aide de forces connues, la mesure de déplacement fournie par l'axe numérique 3 peut ensuite être directement convertie en intensité de force par une unité de traitement UT qui, via une unité centrale UC, vient commander un dispositif de commande de déplacement du bras CB. Lorsque l'intensité de la force F mesurée atteint une valeur de consigne à ne pas excéder, la descente de la buse de saisie 10 sur le composant électronique 11 est interrompue et la buse de saisie 10 prélève le composant 11 par aspiration.

Sur la figure 2C, le bras manipulateur transfère le composant électronique 11 vers un circuit imprimé 17 en cours de montage. Le capteur de force 1 est au repos.

Sur la figure 2D, le bras manipulateur applique le composant électronique 11 sur le circuit imprimé 17 avec une force verticale F' dirigée vers le bas. La déformation élastique du parallélogramme 4 de la cellule de mesure 2 résulte directement de l'intensité de cet effort F'. L'axe numérique 3 mesure la déformation du parallélogramme 4 de la cellule de mesure 2 via le déplacement de la règle incrémentale 13 et fournit en réponse un signal numérique représentant directement la force F' avec laquelle le bras manipulateur applique le composant 11 sur le circuit imprimé 17. Lorsque la force F' atteint une valeur de consigne préétablie, le bras manipulateur libère le composant 11 et un nouveau cycle peut débuter.

Le capteur de force 1 selon l'invention permet d'effectuer des mesures très précises et reproductibles avec une précision de l'ordre de 0,1 gramme. On prendra soin, en cours d'utilisation, de ne pas dépasser la limite d'élasticité du matériau employé pour réaliser la cellule de mesure 2.

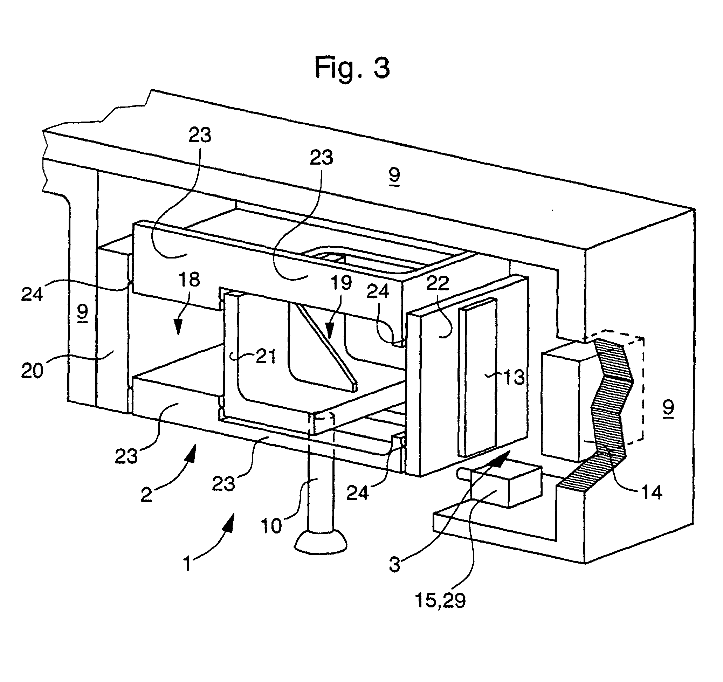

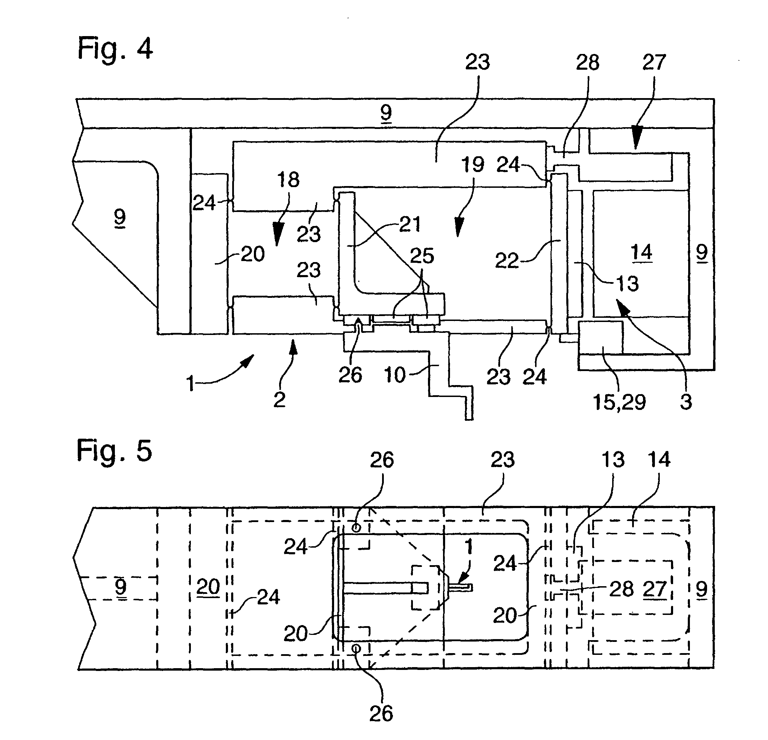

Selon la variante d'exécution préférée de l'invention représentée sur les figures 3 à 5, la cellule de mesure 2 du capteur de force numérique 1 comprend deux structures en parallélogramme déformable 18 et 19 juxtaposées. Comme précédemment, les parallélogrammes déformables 18 et 19 comprennent trois montants intérieur 20, intermédiaire 21 et extérieur 22, et des traverses telles que 23, parallèles deux à deux et reliés entre eux à pivotement par des articulations élastiques telles que 24.

La règle incrémentale 13 est fixée sur le montant extérieur 22, de sorte que la structure à deux parallélogrammes juxtaposés 18 et 19 constitue pour ladite règle incrémentale 13 un bras de levier plus important permettant d'amplifier son déplacement pour une force d'application donnée du bras manipulateur, ce qui permet d'améliorer sensiblement la résolution de la mesure.

La buse de saisie 10 du bras manipulateur est fixée sur le montant intermédiaire 21 de la cellule de mesure 2 par exemple de manière amovible au moyen d'aimants tels que 25. Elle comporte par ailleurs des ergots de positionnement tels que 26 pour son montage précis sur ladite cellule 2. Enfin, un vérin de verrouillage 27 vient par sa tige 28 immobiliser la cellule de mesure 2 lorsque celle-ci n'est pas utilisée.

Le montage du capteur de force 1 est complété par la butée de réglage 15 déjà citée. Cette butée 15 se présente préférentiellement sous la forme d'un dispositif à excentrique 29 dont la position angulaire peut être repérée par des moyens numériques (non représentés), et dont le rôle va maintenant être détaillé.

Avant utilisation, on effectue une étape initiale de mise à zéro de la cellule de mesure 2. A cette fin, l'excentrique 29 est retiré et on laisse la cellule de mesure 2 osciller librement autour de son point d'équilibre. Le signal d'oscillation est enregistré et permet de calculer la moyenne des élongations maximales et minimales de la cellule de mesure 2. On déduit de cette moyenne le point de déplacement nul de la règle incrémentale 13 qui correspond à l'absence de toute force appliquée sur la cellule de mesure 2, en d'autres termes le point de force nulle. Il suffit ensuite de régler au moyen de l'excentrique 29 la position de butée de la cellule de mesure 2 pour que cette position corresponde au point de force nulle déterminé ci-dessus. On comprendra que l'excentrique 29, agissant à la façon d'une butée, accélère également l'amortissement du capteur de force 1 et permet donc à la buse de saisie 10 d'accoster et d'appliquer plus rapidement les composants électroniques 11 sur le circuit imprimé 17, d'où d'importants gains en temps de montage et donc en productivité.

Il va de soi qu'au-delà de la forme de réalisation décrite dans la présente demande, diverses modifications et variantes simples entrent dans le cadre de la présente invention, déterminé par la teneur des revendications.

## Revendications

1. Capteur pour la mesure directe de l'application d'une force comprenant une cellule de mesure (2) déformable élastiquement, la déformation de cette cellule (2) résultant directement de l'application de la force, et des moyens numériques (3) pour mesurer un déplacement représentatif de la déformation de la cellule (2), puis fournissant en réponse à ce déplacement un signal électrique numérique correspondant à la mesure directe de la force appliquée, **caractérisé en ce qu'**il est associé à une butée (15) pour le réglage de la position de butée de la cellule de mesure (2) à son point de déformation nulle qui correspond à l'absence de toute force appliquée sur ladite cellule (2).

2. Capteur selon la revendication 1, **caractérisé en ce que** la butée (15) est formée par un dispositif à excentrique (29).

3. Capteur selon la revendication 2, **caractérisé en ce que** la position angulaire du dispositif à excentrique (29) est repérée par des moyens numériques.

4. Capteur selon l'une quelconque des revendications 1 à 3, **caractérisé en ce que** les moyens de mesure numériques (3) comprennent une règle incrémentale (13) et une tête de mesure (14) placées en regard et qui se déplacent relativement l'une par rapport à l'autre.

5. Capteur selon la revendication 4, **caractérisé en ce que** la règle incrémentale (13) est solidaire de la cellule de mesure (2), et **en ce que** la tête de mesure (14) est montée fixe sur un bâti (9).

6. Capteur selon l'une quelconque des revendications 4 ou 5, **caractérisé en ce que** la règle incrémentale (13) est une règle optique sans contact.

7. Capteur selon l'une quelconque des revendications précédentes, **caractérisé en ce que** la cellule de mesure (2) comprend au moins une structure en parallélogramme déformable (4, 18, 19) constituée par des montants (5, 6, 20-22) et des traverses (7, 23) parallèles deux à deux et reliés entre eux par des articulations élastiques (8, 24).

8. Capteur selon la revendication 7, **caractérisé en ce que** les articulations élastiques (8, 24) sont des charnières.

9. Capteur selon la revendication 8, **caractérisé en ce que** les charnières sont des charnières à parois minces dont l'épaisseur (e) est comprise entre 20 et 50 microns.

10. Capteur selon l'une quelconque des revendications 7 à 9, **caractérisé en ce que** la cellule de mesure (2) est montée fixe par un premier montant (5) du parallélogramme déformable (4) sur le bâti (9), et **en ce que** un deuxième montant (6) du parallélogramme déformable (4) est libre et porte, d'une part une buse de saisie (10) interchangeable, et d'autre part la règle incrémentale (13).

11. Capteur selon l'une quelconque des revendications 7 à 9, **caractérisé en ce que** la cellule de mesure (2) est montée fixe par un premier montant (20) du parallélogramme déformable (18), sur le bâti (9) du bras manipulateur, et **en ce que** un deuxième montant (22) du parallélogramme déformable (19) est libre et porte la règle incrémentale (13), la buse de saisie interchangeable (10) étant fixée sur un troisième montant (21), situé entre les dits premier montant (20) et deuxième montant (22).

12. Capteur selon l'une quelconque des revendications précédentes, **caractérisé en ce qu'**il comporte un vérin de verrouillage (27) qui vient immobiliser par une tige (28) la cellule de mesure (2) lorsque celle-ci n'est pas utilisée.

13. Application du capteur de mesure de force selon l'une quelconque des revendications précédentes au montage de composants électroniques discrets (11) à la surface d'un circuit imprimé (17).

14. Procédé dans lequel, préalablement à la mise en oeuvre du capteur selon la revendication 1, on effectue une étape initiale de mise à zéro de la cellule de mesure (2) en laissant celle-ci osciller librement autour de son point d'équilibre, le signal d'oscillation étant enregistré et permettant de calculer la moyenne des élongations maximales et minimales de ladite cellule de mesure (2), on déduit de la moyenne des élongations de la cellule (2) le point de déplacement nul de la règle incrémentale (13) qui correspond à l'absence de toute force appliquée sur la cellule de mesure (2), et on règle ensuite au moyen du dispositif à excentrique (29) la position de butée de la cellule de mesure (2) pour que cette position corresponde au point de force nulle déterminé ci-dessus.

## Claims

1. Sensor for the direct measurement of the application of a force including a measuring cell (2) able to be deformed elastically, the deformation of said cell (2) resulting directly from the application of the force, and digital means (3) for measuring a displacement representative of the deformation of the cell (2), then supplying in response to this displacement a digital electric signal corresponding to the direct measurement of the force applied, **characterized in that** it cooperates with a stop (15) for adjusting the stop position of the measuring cell (2) to its zero deformation position which corresponds to the absence of any force applied to said cell (2).

2. Sensor according to claim 1, **characterized in that** the stop (15) is formed by a cam device (29).

3. Sensor according to claim 2, **characterized in that** the angular position of the cam device (29) is marked by digital means.

4. Sensor according to any one of claims 1 to 3, **characterized in that** the digital measuring means (3) include a linear incremental measuring device (13) and a measuring head (14) placed facing each other and which move in relation to each other.

5. Sensor according to claim 4, **characterized in that** said linear incremental measuring device (13) is attached to said measuring cell (2), and **in that** the measuring head (14) is fixedly mounted onto a frame (9).

6. Sensor according to either of claims 4 and 5, **characterized in that** the linear incremental measuring device (13) is a contactless optical measuring unit.

7. Sensor according to any one of the preceding claims, **characterized in that** the measuring cell (2) includes at least one parallelogram-like structure (4, 18, 19) which is able to be deformed, formed by beams (5, 6, 20-22) and cross beams (7, 23) in parallel pairs and connected to each other by elastic joints (8, 24).

8. Sensor according to claim 7, **characterized in that** the elastic joints (8, 24) are hinges.

9. Sensor according to claim 8, **characterized in that** the hinges are thin wall hinges, the thickness (e) of said walls being comprised between 20 and 50 microns.

10. Sensor according to any one of claims 7 to 9, **characterized in that** the measuring cell (2) is fixedly mounted via a first beam (5) of the deformable parallelogram (4) onto the frame (9), and **in that** a second beam (6) of the deformable parallelogram (4) is free and carries, on the one hand, an interchangeable grasping nozzle (10), and on the other hand the linear incremental measuring device (13).

11. Sensor according to any one of claims 7 to 9, **characterized in that** the measuring cell (2) is fixedly mounted via a first beam (20) of the deformable parallelogram (18) onto the frame (9) of the robot arm, and **in that** a second beam (22) of the deformable parallelogram (19) is free and carries the linear incremental measuring device (13), the interchangeable grasping nozzle (10) being fixed onto a third beam (21), located between said first beam (20) and said second beam (22).

12. Sensor according to any one of the preceding claims, **characterized in that** it includes a locking cylinder (27) which immobilises the measuring cell (2) by a rod (28) when said cell is not being used.

13. Application of the force measuring sensor according to any one of the preceding claims to the mounting of discrete electronic components (11) onto the surface of a printed circuit (17).

14. Method wherein, prior to implementation of the sensor according to claim 1, an initial step of resetting the measuring cell (2) to zero is performed leaving the latter to oscillate freely about its position of equilibrium, the oscillation signal being recorded and allowing the mean of the maximum and minimum elongations of said measuring cell (2) to be calculated, the position of zero displacement of the linear incremental measuring device (13), which corresponds to the absence of any force applied onto the measuring cell (2) is deducted from said mean elongation of said cell (2), and the stop position of the measuring cell (2) is then adjusted by means of the cam device (29) so that this position corresponds to the zero force position determined hereinbefore.

## Patentansprüche

1. Sensor zur direkten Messung der Anwendung einer Kraft, umfassend eine elastisch verformbare Meßzelle (2), wobei die Verformung dieser Zelle (2) direkt die Anwendung der Kraft ergibt, und digitale Mittel (3), die eine Verschiebung messen, die die Verformung der Zelle (2) repräsentiert, und die dann in Reaktion auf diese Verschiebung ein digitales elektrisches Signal liefern, das der direkten Messung der angewandten Kraft entspricht, **dadurch gekennzeichnet, daß** ihm ein Anschlag (15) zugeordnet ist, der die Anschlagposition der Meßzelle (2) auf ihren verformungsfreien Punkt einstellt, der der Abwesenheit jeglicher auf die Zelle (2) angewandten Kraft entspricht.

2. Sensor nach Anspruch 1, **dadurch gekennzeichnet, daß** der Anschlag (15) durch eine Exzentervorrichtung (29) gebildet ist.

3. Sensor nach Anspruch 2, **dadurch gekennzeichnet, daß** die Winkelstellung der Exzentervorrichtung (29) durch digitale Mittel lokalisiert wird.

4. Sensor nach einem der Ansprüche 1 bis 3, **dadurch gekennzeichnet, daß** die digitalen Meßmittel (3) ein Inkrementallineal (13) und einen Meßkopf (14), die einander gegenüber angeordnet sind und sich relativ zueinander verschieben, umfassen.

5. Sensor nach Anspruch 4, **dadurch gekennzeichnet, daß** das Inkrementallineal (13) mit der Meßzelle (2) fest verbunden ist, und daß der Meßkopf (14) an einem Rahmen (9) fest montiert ist.

6. Sensor nach einem der Ansprüche 4 oder 5, **dadurch gekennzeichnet, daß** das Inkrementallineal (13) ein kontaktloses optisches Lineal ist.

7. Sensor nach einem der vorhergehenden Ansprüche, **dadurch gekennzeichnet, daß** die Meßzelle (2) wenigstens eine verformbare Parallelogrammstruktur (4, 18, 19) umfaßt, die durch zueinander parallele Streben (5, 6, 20-22) und zueinander parallele Querstreben (7, 23) gebildet sind, die miteinander durch elastische Gelenke (8, 24) verbunden sind.

8. Sensor nach Anspruch 7, **dadurch gekennzeichnet, daß** die elastischen Gelenke (8, 24) Scharniere sind.

9. Sensor nach Anspruch 8, **dadurch gekennzeichnet, daß** die Scharniere Scharniere mit dünnen Wänden sind, deren Dicke (e) im Bereich von 20 bis 50 µm liegt.

10. Sensor nach einem der Ansprüche 7 bis 9, **dadurch gekennzeichnet, daß** die Meßzelle (2) über eine erste Strebe (5) des verformbaren Parallelogramms (4) am Rahmen (9) fest montiert ist und daß eine zweite Strebe (6) des verformbaren Parallelogramms (4) frei beweglich ist und einerseits einen austauschbaren Angriffsstutzen (10) und andererseits das Inkrementallineal (13) trägt.

11. Sensor nach einem der Ansprüche 7 bis 9, **dadurch gekennzeichnet, daß** die Meßzelle (2) über eine erste Strebe (20) des verformbaren Parallelogramms (18) am Rahmen (9) des Betätigungsarms fest montiert ist und daß eine zweite Strebe (22) des verformbaren Parallelogramms (19) frei beweglich ist und das Inkrementallineal (13) trägt, wobei der austauschbare Angriffsstutzen (10) an einer dritten Strebe (21) befestigt ist, der sich zwischen der ersten Strebe (20) und der zweiten Strebe (22) befindet.

12. Sensor nach einem der vorhergehenden Ansprüche, **dadurch gekennzeichnet, daß** er einen Verriegelungszylinder (27) umfaßt, der über einen Stift (28) die Meßzelle (2) arretiert, wenn diese nicht in Gebrauch ist.

13. Anwendung des Kraftmeßsensors nach einem der vorhergehenden Ansprüche auf die Montage diskreter elektronischer Bauelemente (11) auf der Oberfläche einer gedruckten Schaltung (17).

14. Verfahren, bei dem vor der Verwendung des Sensors nach Anspruch 1 ein anfänglicher Schritt des Nullsetzens der Meßzelle (2) ausgeführt wird, bei dem man die Meßzelle (2) frei um ihren Gleichgewichtspunkt oszillieren läßt, wobei das Oszillationssignal aufgezeichnet wird und die Berechnung des Mittelwerts der maximalen und minimalen Elongationen der Meßzelle (2) ermöglicht, wobei aus dem Mittelwert der Elongationen der Zelle (2) der Verschiebungspunkt null des Inkrementallineals (13) abgeleitet wird, der der Abwesenheit jeglicher auf die Meßzelle (2) ausgeübten Kraft entspricht, und wobei anschließend mittels der Exzentervorrichtung (29) die Anschlagposition der Meßzelle (2) eingestellt wird, damit diese Position dem oben bestimmten Kraftpunkt null entspricht.
